# EUROPÄISCHE PATENTSCHRIFT

(11) **EP 1 927 834 B1**
(45) Veröffentlichungstag und Bekanntmachung des Hinweises auf die Patenterteilung: **26.05.2010**
(21) Anmeldenummer: 06024969.5
(22) Anmeldetag: 02.12.2006
(51) Int. Cl.: G01L 5/10, G01L 1/26, G01L 1/22

(54) **Walze mit einem Kraftsensor**
Pulley with force sensor
Rouleau avec un capteur de force

(43) Veröffentlichungstag der Anmeldung: 04.06.2008
(73) Patentinhaber: Texmag GmbH Vertriebsgesellschaft, 8800 Thalwil (CH)
(72) Erfinder: Werber, Rudolf, D-86343 Königsburn (DE); Thurner, Frank, D-86163 Augsburg (DE); Hain, Tobias, D-86161 Augsburg (DE)
(74) Vertreter: Witzany, Manfred

(56) Entgegenhaltungen:
- EP-A1- 0 107 958
- EP-A1- 0 708 319
- EP-A1- 1 584 907
- WO-A-2006/010673
- DE-C- 953 840
- US-A- 4 765 423
- US-A1- 2004 181 312

## Beschreibung

Die Erfindung betrifft eine Walze mit einem Kraftsensor zur Messung einer Lagerkraft der Walze, gemäß dem Oberbegriff des Patentanspruchs 1.

Aus der DE 101 18 887 C1 ist ein Kraftsensor zum Erfassen einer Lagerkraft einer eine Warenbahn umlenkenden Walze bekannt. Dieser Kraftsensor weist ein Basiselement auf, welches an einer maschinenfesten Achse stationär gehalten ist. Dieses Basiselement ist mit einem Sensorelement einstückig verbunden, welches zwei elastisch verformbare Doppelbiegebalken aufweist. Auf diese Doppelbiegebalken wirkt jeweils ein Druckstück ein, welches unmittelbar von der zu messenden Lagerkraft belastet ist. Beide Doppelbiegebalken sind im Bereich ihrer stärksten Krümmung mit Kraftaufnehmer versehen, um die Deformation der Doppelbiegebalken aufgrund der Lagerkraft zu erfassen.

Aus der US 2004/181312 A1 ist ein Roboter mit einem Kraftsensor bekannt. Dieser Kraftsensor weist eine deformierbare Platte auf, an der ein Sensorelement angebracht ist. Die Kraft selbst wird über ein Druckstück und eine Feder in die deformierbare Platte eingekoppelt. Diese Feder hat dabei die Aufgabe, ein sanftes Berühren von Gegenständen zu ermöglichen. Gerät das Druckstück mit einem harten Gegenstand in Kontakt, so wird zunächst die Feder komprimiert, so daß die Kontaktkraft zunächst klein bleibt. Mit zunehmender Annäherung an diesen Gegenstand nimmt die wirkende Druckkraft zu, die vom Sensor erfaßt wird. Damit hat eine Kraftregelung die Möglichkeit, die Annäherung derart zu verlangsamen, daß eine bestimmte vorgegebene Haltekraft erreicht wird.

Aus der DE 953 840 C ist eine Walze mit einer Kraftmeßvorrichtung zur Erfassung der Lagerkraft bekannt. Diese Walze ist an einer elastisch verbiegbaren Platte abgestützt und kann damit entsprechend der auftretenden Lagerkraft ihre Lage geringfügig ändern. Die Lage der Walze selbst wird über eine Tauchspulenanordnung gemessen, um die auftretende Lagerkraft zu bestimmen.

Der Erfindung liegt die Aufgabe zugrunde, eine Walze mit einem Kraftsensor der eingangs genannten Art zu schaffen, der sich durch eine verbesserte Ausfallsicherheit auszeichnet.

Diese Aufgabe wird erfindungsgemäß mit den Merkmalen des Patentanspruchs 1 gelöst.

Die Walze gemäß Anspruch 1 dient zur Messung einer Lagerkraft einer Walze, welche eine Warenbahn umlenkt. Die Warenbahn ist dabei vorzugsweise eine Papier-, Wellpappen-, Folien-, Textil-, Filz- oder Siebbahn. Sie kann durchlaufend oder als umlaufende Endlosbahn ausgebildet sein. Bei bekanntem Gewicht der Walze und bekanntem Umschlingungswinkel derselben durch die Warenbahn kann hieraus die Zugspannung der Warenbahn berechnet werden, die für verschiedene Applikationen, insbesondere Zugspannungsregelungen von erheblicher Bedeutung ist. Der Kraftsensor weist ein Basiselement auf, welches in der Regel maschinenfest und damit stationär angeordnet ist. An diesem Basiselement ist mindestens ein Sensorelement vorgesehen, welches die eigentliche Krafterfassung vornimmt. Es spielt dabei keine Rolle, ob dieses Sensorelement einstückig mit dem Basiselement verbunden ist oder ein gesondertes, auf dem Basiselement abgestütztes Teil bildet. Das Sensorelement weist zumindest eine durch die zu messende Lagerkraft elastisch verformbare Platte auf, welche die zu erfassende Lagerkraft in eine proportionale Deformation umwandelt. Diese elastische Deformation wird mittels mindestens einem Kraftaufnehmer, vorzugsweise einem Dehnungsmeßstreifen in ein elektrisches Meßsignal, insbesondere eine Widerstandsänderung umgewandelt. Zum Einbringen der Lagerkraft in das Sensorelement ist dieses von einem Druckstück belastet, welches die zu messende Lagerkraft auf die elastisch deformierbare Platte überträgt. Während des Laufs der Warenbahn um die umlenkende Walze kommt es häufig zu erheblichen Kraftspitzen, die beispielsweise durch Unregelmäßigkeiten in der Warenbahn selbst oder im Bahnlauf bedingt sind. Bei einem Bahnriß oder Wickelbildungen wird die Walze ebenfalls sehr hohen Belastungen ausgesetzt. Hohe Kraftspitzen treten auch beim Einbau der Walze auf, da deren gesamtes Gewicht schlagartig auf dem Kraftsensor abgesetzt wird. Diese Kraftspitzen können ein Vielfaches der zu messenden durchschnittlichen Lagerkraft ausmachen, wobei sie nur sehr kurzzeitig, vorzugsweise im Mikrosekundenbereich auftreten. Die Walzenmechanik und auch die Warenbahn können derart kurze Kraftspitzen problemlos überstehen. Dagegen kommt es immer wieder vor, daß das Sensorelement und insbesondere die Kraftaufnehmer durch diese Kraftspitzen zerstört werden. Um diese Kraftspitzen möglichst vom Sensorelement fernzuhalten, wird die Kraft über mindestens eine Feder in das Druckstück eingeleitet. Diese Feder ist dabei derart dimensioniert, daß diese in Kraftrichtung betrachtet bei gleicher Belastung einen größeren Federweg aufweist, als die elastisch verformbare Platte. Beim Auftreten eines Schlages auf die Walze kann daher das Walzenlager dieser Kraft ausweichen, so daß sich der Maximalwert der Kraftspitze am Sensorelement entsprechend reduziert. Dies hat auf das Meßergebnis keinen Einfluß, da die Feder die Energie dieses Stoßes im wesentlichen als elastische Energie speichert und verzögert an das Sensorelement weitergibt. Die Kraftspitze wird daher durch diese Maßnahme kleiner und breiter, wobei insgesamt die Spitzenbelastung des Sensorelements entsprechend reduziert ist. Der gemessene zeitliche Mittelwert der Lagerkraft bleibt jedoch von dieser Maßnahme unberührt. Dennoch kann es bei sehr hohen auftretenden Kraftspitzen, beispielsweise beim Durchlauf eines Splices in der Warenbahn, zu derart starken Stößen auf das Sensorelement kommen, daß es trotz dieser Maßnahme zerstört würde. Aus diesem Grund ist zur Begrenzung der Kraftwirkung auf das Sensorelement das Druckstück gegen einen Anschlag des Basiselements drückbar. Dieser Anschlag begrenzt damit den maximalen Weg des Druckstücks auf einen Wert, der für das Sensorelement in der Regel unschädlich ist. Damit geht ein Teil der Lagerkraft am Sensorelement vorbei und wird über den Anschlag in das Basiselement abgeleitet. Dies verursacht zwar eine Verfälschung der Meßergebnisse, sorgt jedoch für eine Aufrechterhaltung der Funktionstüchtigkeit des Sensorelements. Die Fehlmessung ist in diesem Fall ohnehin tolerierbar, da derart hohe Kraftspitzen, die trotz der in den Kraftweg eingebauten Feder noch in zerstörerischer Größe beim Sensorelement ankommen würden, sich ohnehin nicht ausregeln lassen, da sie zu kurz sind. Nachdem derart starke Stöße sehr selten sind, kann diese Form der Fehlmessung problemlos akzeptiert werden. Wichtig ist jedoch die konkrete Ausbildung des Anschlags, da dieser insbesondere bei Stößen erhebliche Impulsenergien aufnehmen muß. Er muß zum einen hinreichend präzise gefertigt sein, um weder den Meßbereich des Sensorelements unnötig einzugrenzen, noch eine Gefährdung des Sensorelements in Kauf nehmen zu müssen. Zum anderen darf sich der Anschlag nicht durch die Stoßenergie deformieren. Schließlich muß sichergestellt werden, daß das Sensorelement nach einem derart starken Stoß wieder in seine Ausgangsposition zurückfindet. Zur Lösung dieser unterschiedlichen Aufgaben wird der Anschlag ringartig um das Sensorelement herum ausgebildet. Das Druckstück ist dabei flächig gegen den Anschlag drückbar, wodurch sich eine präzise Abstützung des Druckstücks im Anschlag ergibt. Außerdem entstehen durch diesen Anschlag keinerlei Seiten- oder Kippkräfte, die zu einer Verkantung des Druckstücks und damit zu einem Verklemmen desselben führen könnten. Auf diese Weise ist der Kraftsensor optimal vor starken Stößen geschützt. Dies erhöht die Lebensdauer des Sensorelements beträchtlich.

Um den Anschlag in seiner Größe optimal auf das jeweilige Sensorelement abstimmen zu können, ist es gemäß Anspruch 2 günstig, wenn der Anschlag lose auf dem Basiselement aufliegt. Damit kann der Anschlag sehr einfach gegen einen anderen mit angepaßter Höhe ausgetauscht werden, falls dies zur Abstimmung an die Höhe des Sensorelements erforderlich sein sollte.

Um den Anschlag möglichst einfach an unterschiedliche Höhen der Sensorelemente anpassen zu können, ist es gemäß Anspruch 3 günstig, wenn der Anschlag aus mehreren, übereinander stapelbaren Teilen besteht. Damit kann die Anschlaghöhe wie in einem Baukasten aus Standardteilen zusammengesetzt werden, ohne für jedes Sensorelement einen individuellen Anschlag fertigen zu müssen.

Damit der Anschlag dauerhaft auch hohen Stoßbelastungen standhalten kann, ist es gemäß Anspruch 4 vorteilhaft, diesen aus gehärtetem Stahl zu fertigen.

Um den Aufprall des Druckstücks auf dem Anschlag abzumildern und damit die Lebensdauer des Druckstücks zu erhöhen, ist es gemäß Anspruch 5 günstig, dem Anschlag mindestens eine weitere Feder parallel zu schalten. Diese weitere Feder sollte allerdings gegenüber der ersten Feder schwach dimensioniert sein, um die vom Sensorelement erzielten Meßergebnisse nicht zu beeinträchtigen. Durch diese zusätzliche Feder wird die Stoßbelastung des Anschlags reduziert und damit dessen Lebensdauer vergrößert.

Alternativ oder zusätzlich kann gemäß Anspruch 6 auch zwischen dem Kraftaufnehmer und der elastisch verformbaren Platte mindestens ein Federelement vorgesehen sein. Dieses Federelement schützt den Kraftaufnehmer vor übermäßiger Belastung. Wird die Deformation der elastisch verformbaren Platte aufgrund einer erheblichen Stoßbelastung zu groß, so kann das Federelement die Verformung zum Teil aufnehmen, so daß die Bruchgefahr des Kraftaufnehmers entsprechend reduziert ist. Auf diese Weise kann gegebenenfalls der zusätzlich vorgesehene Anschlag entfallen. Als zusätzliche Sicherungsmaßnahme für das Sen sorelement ist dieser Anschlag jedoch trotzdem günstig.

Für die Ausbildung des Federelements hat sich gemäß Anspruch 7 ein gummiartiges Bauteil bewährt, welches die Deformation in Form einer elastischen Verspannung in sich aufnehmen kann. Vorzugsweise besteht das elastische Bauteil aus einem Silikonkautschuk.

Außerdem ist es gemäß Anspruch 8 günstig, wenn das Federelement von einer dünnen Membran gebildet ist, die flächig mit der elastisch verformbaren Platte und dem Kraftaufnehmer verbunden ist. Auf diese Weise wird im normalen Betriebsfall der Kraftaufnehmer die Deformation der elastisch verformbaren Platte nahezu verlustfrei auf den Kraftaufnehmer übertragen. Nur bei sehr hohen Stoßbelastungen erfolgt eine zusätzliche Deformation der dünnen Membran, die den Kraftaufnehmer vor Zerstörung schützt.

Eine einfache Realisierung des Kraftaufnehmers in Form eines Dehnungsmeßstreifens ergibt sich aus Anspruch 9. Ein Dehnungsmeßstreifen hat den Vorteil, daß dieser auch geringe Deformationen des Sensorelements in ein gut auswertbares elektrisches Signal, nämlich eine Widerstandsänderung umformt. Nachteilig an Dehnungsmeßstreifen ist zwar deren relativ starke Temperaturabhängigkeit, diese läßt sich jedoch einfach beispielsweise durch Aufbau einer Wheatstoneschen Brücke kompensieren.

Um den Kraftsensor vor extremen Störfällen, wie beispielsweise einem Bahnriß oder einem Bahnwickel zu schützen, ist es gemäß Anspruch 10 günstig, wenn dem Kraftsensor mindestens ein Endschalter zugeordnet ist. Dieser Endschalter wird ausgelöst, wenn die Lagerkraft ein vorgegebenes Maß überschreitet. Vorzugsweise wird die Warenbahnantriebsvorrichtung durch den Endschalter unterbrochen.

Zur Erzielung eines einfachen Aufbaus ist es gemäß Anspruch 11 vorteilhaft, wenn der Endschalter im Bereich des Anschlags des Kraftsensors vorgesehen ist. Damit wird der Endschalter immer dann betätigt, wenn ein Stoß ausreichend stark ist, um den Anschlag selbst zu betätigen.

Zur Erleichterung der Montage des Kraftsensors ist es gemäß Anspruch 12 günstig, wenn dem Kraftsensor mindestens eine Abdrückschraube zugeordnet ist. Diese Abdrückschraube kann den Kraftsensor entlasten, um diesen einfach wechseln zu können. Die Abdrückschraube dient außerdem als Transportsicherung der Walze.

Schließlich ist es gemäß Anspruch 13 vorteilhaft, wenn die Feder an einer Glocke abgestützt ist. Die Glocke schützt die Innenaufbauten des Kraftsensors und gewährt trotzdem eine einfache Krafteinleitung in das Sensorelement. Um zu verhindern, daß die Glocke beim Transport des Kraftsensors oder bei Über-Kopf-Montage verloren geht, ist zwischen der Glocke und dem Basiselement ein Sicherungselement vorgesehen. Dieses Sicherungselement wird vorzugsweise von einer Schraube gebildet, die eine Bohrung der Glocke durchsetzt. Im normalen Betriebszustand berührt das Sicherungselement die Glocke nicht.

Der Erfindungsgegenstand wird beispielhaft anhand der Zeichnung erläutert, ohne den Schutzumfang zu beschränken.

### Es zeigt:

- Figur 1: eine Darstellung einer Wälze mit einem Kraftsensor und
- Figur 2: eine vergrößerte Schnittdarstellung des Kraftsensors gemäß Figur 1.

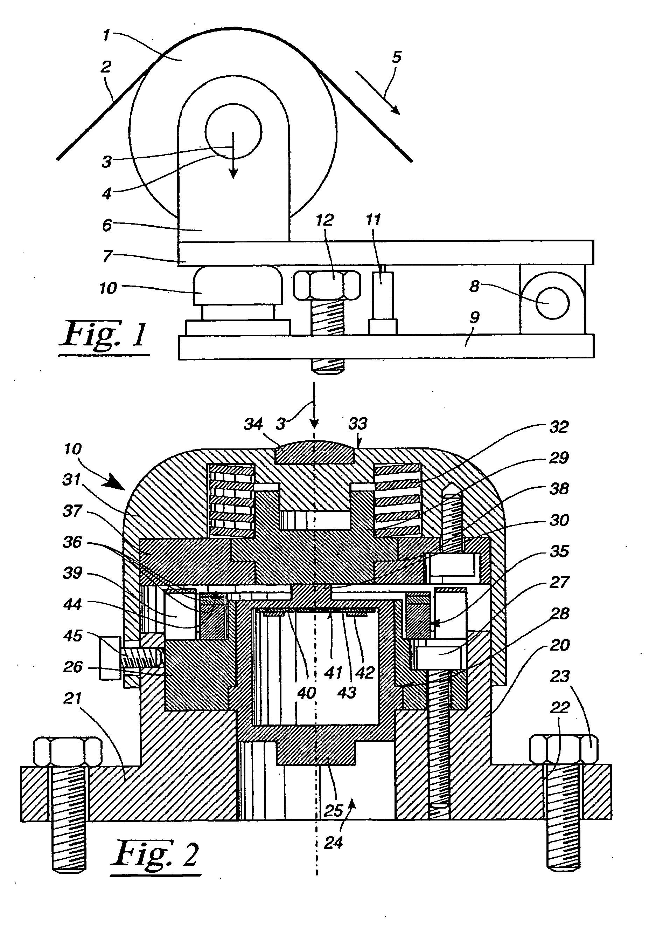

Die Figur 1 zeigt eine Walze 1, an der eine laufende Warenbahn 2 umgelenkt ist. Aufgrund der Zugspannung 5 der Warenbahn 2 und des Umschlingungswinkels um die Walze 1 ergibt sich eine Lagerkraft 3, die auf ein Lager 4 der Walze 1 wirkt. Zur Bestimmung der Zugspannung 5 der Warenbahn 2 reicht es bei bekanntem Gewicht der Walze 1 und bekanntem Umschlingungswinkel um die Walze 1 aus, die Lagerkraft 3 zu messen.

Zur Erfassung der Lagerkraft 3 ist das Lager 4 der Walze 1 über Konsolen 6 an einer schwenkbaren Platte 7 abgestützt. Die Platte 7 ist um ein Schwenklager 8 verschwenkbar gehalten, welches an einer stationären Platte 9 abgestützt ist. Damit kann die Walze 1 frei um das Schwenklager 8 als Drehachse verschwenkt werden. Unter der Walze 1 ist ein Kraftsensor 10 vorgesehen, der die Lagerkraft 3 erfaßt und in ein elektrisches Signal umwandelt.

Zwischen den Platten 7, 9 ist ein Endschalter 11 vorgesehen, der mit einem nicht dargestellten Antrieb für die Warenbahn 2 in Wirkverbindung steht. Wird dieser Endschalter 11 betätigt, so wird der Antrieb der Warenbahn 2 unterbrochen, um auf eine Fehlersituation zu reagieren. Der Endschalter 11 kann entgegen der Darstellung gemäß Figur 1 auch innerhalb des Kraftsensors 10 integriert sein.

Zwischen den Platten 7, 9 ist außerdem eine Abdrückschraube 12 vorgesehen, mit deren Hilfe die beiden Platten 7, 9 auseinander gedrückt werden können. Mit Hilfe dieser Abdrückschraube 12 kann der Kraftsensor 10 vollständig entlastet werden, um diesen leicht ein- bzw. ausbauen zu können. Dies erleichtert Servicearbeiten am Kraftsensor 10. Außerdem dient die Abdrückschraube 12 als Transportsicherung und zum Schutz des Kraftsensors 10 während des Einbaus der Walze 1 in eine Anlage.

Der Aufbau des Kraftsensors 10 wird anhand der Schnittdarstellung gemäß Figur 2 näher erläutert. Der Kraftsensor 10 weist ein Basiselement 20 auf, an dem unterseitig ein Flansch 21 angeformt ist. Dieser Flansch 21 ist mit Bohrungen 22 versehen, die von Schrauben 23 durchsetzt sind. Diese Schrauben 23 dienen zur Festlegung des Kraftsensors 10 an der stationären Platte 9.

Das Basiselement 20 weist einen im wesentlichen zylindrischen zentralen Hohlraum 24 auf, der sich nach oben hin stufenartig erweitert. In diesem zentralen Hohlraum 24 ist ein Sensorelement 25 abgestützt. Zur Festlegung des Sensorelements 25 im Basiselement 20 ist ein Ring 26 vorgesehen, der eine stufenartige Verjüngung 28 des Sensorelements 25 oberseitig übergreift. Dieser Ring 26 ist mittels Schrauben 27 im Basiselement 20 festgelegt, so daß das Sensorelement 25 fest mit dem Basiselement 20 verbunden ist.

Zur Einleitung der Lagerkraft 3 in das Sensorelement 25 ist ein Druckstück 29 vorgesehen, welches von oben gegen eine Nocke 30 des Sensorelements 25 drückt. Dieses Druckstück 29 ist in einer das Sensorelement 25 schützenden Glocke 31 abgestützt und mittels einer Feder 32 gegen das Sensorelement 25 vorgespannt. Die Glocke 31 ist dabei relativ zum Basiselement 20 verschiebbar gehalten. Am oberen Ende 33 weist die Glocke 31 eine gehärtete Nocke 34 auf, die gegen die schwenkbare Platte 7 drückt. Auf diese Weise wird die Lagerkraft 3 über die Glocke 31, die Feder 32 und das Druckstück 29 in das Sensorelement 25 eingeleitet.

Zur Sicherung des Sensorelements 25 gegen Überbelastung wirkt das Druckstück 29 mit einem Anschlag 35 zusammen, der von einer Anzahl Ringen 36 gebildet ist. Die Ringe 36 haben unterschiedliche Dicken, um auf diese Weise die erforderliche Anschlaghöhe zu realisieren. Der Anschlag 36 wirkt gegen einen Ring 37 der Glocke 31, der nach oben stufenartig erweitert ausgebildet ist. Diese stufenartige Erweiterung 38 bildet für das Druckstück 29 einen weiteren Anschlag, der eine übermäßige Kraftspitze vom Sensorelement 25 fernhält. Um den Anschlag 35 herum ist eine zusätzliche Wellfeder 39 vorgesehen, die im wesentlichen harte Schläge gegen den Anschlag 35 dämpfen soll. Die Wellfeder 39 ist dabei erheblich schwächer ausgebildet als die Feder 32.

Im Sensorelement 25 ist eine elastisch verformbare Platte 40 vorgesehen, die durch die Wirkung des Druckstücks 29 einer elastischen Biegedeformation unterworfen wird. Damit wird die Lagerkraft 3 in eine Deformation der Platte 40 umgewandelt. Auf der Unterseite 41 der Platte 40 sind Kraftaufnehmer 42 in Form von Dehnungsmeßstreifen angebracht, die die elastische Verformung der Platte 40 in ein elektrisches Signal, insbesondere eine Widerstandsänderung umwandeln. Dabei sind vier Kraftaufnehmer 42 vorgesehen, die zu einer Wheatoneschen Brücke verschaltet sind. Die Kraftaufnehmer 42 sind über eine gummielastische Membrane 43 mit der Platte 40 flächig verbunden, um eine Zerstörung der Kraftaufnehmer 42 bei übermäßiger Verbiegung der Platte 40 zu verhindern. Alternativ könnten die Kraftaufnehmer 42 auch unmittelbar an der elastisch deformierbaren Platte 40 angebracht sein.

Im Normalbetrieb liegt die schwenkbare Platte 7 auf der Glocke 31 auf. Die wirkende Lagerkraft 3 wird von der Feder 32 auf das Druckstück 29 übertragen, welches ausschließlich gegen das Sensorelement 25 drückt. Die Feder 32 preßt dabei das Druckstück 29 gegen den Ring 37, so daß das Druckstück 29 zusammen mit der Glocke 31 eine feste Einheit bildet. Zwischen dem Ring 37 und dem Anschlag 35 ergibt sich dabei ein Spalt 44. In dieser Betriebsart wird die Lagerkraft 3 exakt und unverfälscht vom Sensorelement 25 erfaßt.

Treten hohe Lastspitzen der Lagerkraft 3 beispielsweise durch Schläge auf, so wird die Feder 32 zusammengedrückt, so daß sich die Glocke 31 zusammen mit dem Ring 37 nach unten verschiebt, ohne daß das Druckstück 29 diese Bewegung mitmachen würde. Dabei entsteht zwischen dem Druckstück 29 und dem Ring 37 im Bereich der stufenartigen Erweiterung 38 ein Spalt. Dies hat zur Folge, daß das Druckstück 29 die Kraftspitze ähnlich der Wirkung eines Stoßdämpfers verzögert an das Sensorelement 25 abgibt. Die Kraftspitze wird demnach vom Betrag her kleiner, wobei bedingt durch die Speicherwirkung der Feder 32 die Stoßzeit entsprechend zunimmt. Demnach bleibt der Mittelwert der gemessenen Lagerkraft gleich, wobei sich die schädliche Wirkung der Stöße entsprechend verringert.

Bei sehr energiereichen Stößen auf die Glocke 31 schlägt der Ring 37 auf den Anschlag 35 an, so daß dort der Spalt 44 verschwindet. Damit wird die Lagerkraft 3 zum Teil über den Ring 37 und den Anschlag 35 unter Umgehung des Sensorelements 25 in das Basiselement 20 eingeleitet. Auf diese Weise wird das Sensorelement 25 vor starken Überlastungen geschützt.

Zwischen der Glocke 21 und dem Basiselement 11 ist außerdem ein Sicherungselement 45 in Form einer Schraube vorgesehen. Dieses Sicherungselement 45 durchsetzt die Glokke 21, ohne diese tatsächlich zu berühren. Das Sicherungselement 45 verhindert auf diese Weise ein Verlieren der Glocke 21, wenn der Kraftsensor 10 beispielsweise kopfüber, also mit der Glocke 21 nach unten ausgerichtet ist. Außerdem erleichtert das Sicherungselement 45 die Montage des Kraftsensors 10.

### Bezugszeichenliste

- 1: Walze
- 2: Warenbahn
- 3: Lagerkraft
- 4: Lager
- 5: Zugspannung
- 6: Konsole
- 7: schwenkbare Platte
- 8: Schwenklager
- 9: stationäre Platte
- 10: Kraftsensor
- 11: Endschalter
- 12: Abdrückschraube
- 20: Basiselement
- 21: Flansch
- 22: Bohrung
- 23: Schraube
- 24: Hohlraum
- 25: Sensorelement
- 26: Ring
- 27: Schraube
- 28: Verjüngung
- 29: Druckstück
- 30: Nocke
- 31: Glocke
- 32: Feder
- 33: oberes Ende
- 34: Nocke
- 35: Anschlag
- 36: Ring
- 37: Ring

- 38: stufenartige Erweiterung
- 39: Wellfeder
- 40: elastisch verformbare Platte
- 41: Unterseite
- 42: Kraftaufnehmer
- 43: Membran
- 44: Spalt
- 45: Sicherungselement

## Patentansprüche

1. Walze zur Umlenkung einer Warenbahn (2), die als umlaufende Endlosbahn ausgebildet ist, wobei die Walze (1) an einer Platte (7) abgestützt ist, die zur Messung einer Lagerkraft (3) der Walze (1) mit einem Kraftsensor (10) in Wirkverbindung steht, der ein Basiselement (20) aufweist, an dem mindestens ein Sensorelement (25) vorgesehen ist, das zumindest eine durch die Lagerkraft (3) elastisch verformbare Platte (40) aufweist, und, **dadurch gekennzeichnet, daß** die die Walze (1) abstützende Platte (7) um ein Schwenklager (8) verschwenkbar gehalten ist, welches an einer stationären Platte (9) abgestützt ist, wobei zwischen der verschwenkbaren Platte (7) und der stationären Platte (9) der Kraftsensor (10) vorgesehen ist, und die elastisch verformbare Platte (40) mit mindestens einem Kraftaufnehmer (42) bestückt ist, und das Sensorelement (25) von einem Druckstück (29) belastet ist, wobei die Lagerkraft (3) über mindestens eine Feder (32) in das Druckstück (29) eingeleitet ist, um von der Warenbahn (2) hervorgerufene Kraftspitzen vom Sensorelement (25) fernzuhalten, wobei die mindestens eine Feder (32) - in Kraftrichtung betrachtet - bei gleicher Belastung einen größeren Federweg aufweist als die elastisch verformbare Platte (40), und zur Begrenzung der Kraftwirkung auf das Sensorelement (25) das Druckstück (29) gegen einen ringartigen Anschlag (35) flächig drückbar ist, welcher um das Sensorelement (25) herum vorgesehen ist.

2. Walze nach Anspruch 1, **dadurch gekennzeichnet, daß** der Anschlag (35) lose auf dem Basiselement (20) aufliegt.

3. Walze nach Anspruch 1 oder 2, **dadurch gekennzeichnet, daß** der Anschlag (35) zur Höhenanpassung aus mehreren, übereinander stapelbaren Teilen (36) besteht.

4. Walze nach mindestens einem der Ansprüche 1 bis 3, **dadurch gekennzeichnet, daß** der Anschlag (35) aus gehärtetem Stahl besteht.

5. Walze nach mindestens einem der Ansprüche 1 bis 4, **dadurch gekennzeichnet, daß** dem Anschlag (35) mindestens eine weitere Feder (39) parallel geschaltet ist.

6. Walze nach mindestens einem der Ansprüche 1 bis 5, **dadurch gekennzeichnet, daß** die Lagerkraft (3) über mindestens eine Feder (32) in das Druckstück (29) eingeleitet ist, welche - in Kraftrichtung betrachtet - bei gleicher Belastung einen größeren Federweg aufweist als die elastisch verformbare Platte (40) und zur Begrenzung der Kraftwirkung auf den Kraftaufnehmer (42) zwischen diesem und der elastisch verformbaren Platte (40) mindestens ein Federelement (43) vorgesehen ist.

7. Walze nach Anspruch 6, **dadurch gekennzeichnet, daß** das Federelement (43) von einem gummiartigen Bauteil gebildet ist.

8. Walze nach Anspruch 6 oder 7, **dadurch gekennzeichnet, daß** das Federelement (43) von einer Membran (43) gebildet ist, welche flächig mit der elastisch verformbaren Platte (40) und dem Kraftaufnehmer (42) verbunden ist.

9. Walze nach mindestens einem der Ansprüche 1 bis 8, **dadurch gekennzeichnet, daß** der Kraftaufnehmer (42) von mindestens einem Dehnungsmeßstreifen gebildet ist.

10. Walze nach mindestens einem der Ansprüche 1 bis 9, **dadurch gekennzeichnet, daß** dem Kraftsensor (10) mindestens ein Endschalter (11)zugeordnet ist, der bei Betätigung den Warenbahnlauf stoppt.

11. Walze nach Anspruch 10, **dadurch gekennzeichnet, daß** der Endschalter (11) im Bereich des Anschlags (35) vorgesehen ist.

12. Walze nach mindestens einem der Ansprüche 1 bis 11, **dadurch gekennzeichnet, daß** dem Kraftsensor (10) mindestens eine Abdrückschraube (12) zugeordnet ist, die den Kraftsensor (10) entlasten kann.

13. Walze nach mindestens einem der Ansprüche 1 bis 12, **dadurch gekennzeichnet, daß** die Feder (32) an einer Glocke (31) abgestützt ist, wobei zwischen der Glocke (31) und dem Basiselement (20) mindestens ein Sicherungselement (45) vorgesehen ist.

## Claims

1. Roller for deflecting a material web (2) in the form of an endlessly circulating web, wherein the roller (1) is supported on a plate (7) which, for the purpose of measuring a bearing force (3) of the roller (1), is operatively connected to a force sensor (10) which has a base element (20) on which is provided at least one sensor element (25) which has at least one plate (40) which can be elastically deformed by the bearing force (3), **characterized in that** the plate (7), which supports the roller (1), is retained such that it can be pivoted about a pivot bearing (8) which is supported on a stationary plate (9), wherein the force sensor (10) is provided between the pivotable plate (7) and the stationary plate (9), and the elastically deformable plate (40) is fitted with at least one force transducer (42), and the sensor element (25) is subjected to loading by a pressure-exerting component (29), wherein the bearing force (3) is introduced into the pressure-exerting component (29) via at least one spring (32) in order for force peaks produced by the material web (2) to be kept away from the sensor element (25), wherein the at least one spring (32) - as seen in the direction of force - when subjected to an equal level of loading, exhibits a greater amount of resilient deflection than the elastically deformable plate (40), and, for the purpose of limiting the action of force on the sensor element (25), the pressure-exerting component (29) can be pressed with surface contact against an annular stop (35) which is provided around the sensor element (25).

2. Roller according to Claim 1, **characterized in that** the stop (35) rests loosely on the base element (20).

3. Roller according to Claim 1 or 2, **characterized in that** the stop (35), for height-adaptation purposes, comprises a plurality of parts (36) which can be stacked one above the other.

4. Roller according to at least one of Claims 1 to 3, **characterized in that** the stop (35) consists of hardened steel.

5. Roller according to at least one of Claims 1 to 4, **characterized in that** the stop (35) has a least one further spring (39) connected in parallel with it.

6. Roller according to at least one of Claims 1 to 5, **characterized in that** the bearing force (3) is introduced into the pressure-exerting component (29) via at least one spring (32) which - as seen in the direction of force - when subjected to an equal level of loading, exhibits a greater amount of resilient deflection than the elastically deformable plate (40), and, for the purpose of limiting the action of force on the force transducer (42), at least one resilient element (43) is provided between this force transducer and the elastically deformable plate (40).

7. Roller according to Claim 6, **characterized in that** the resilient element (43) is formed by a rubber-like component.

8. Roller according to Claim 6 or 7, **characterized in that** the resilient element (43) is formed by a membrane (43) which is connected to the elastically deformable plate (40) and the force transducer (42), in surface contact therewith.

9. Roller according to at least one of Claims 1 to 8, **characterized in that** the force transducer (42) is formed by at least one strain gauge.

10. Roller according to at least one of Claims 1 to 9, **characterized in that** the force sensor (10) is assigned at least one limit switch (11) which, upon actuation, stops the travel of the material web.

11. Roller according to Claim 10, **characterized in that** the limit switch (11) is provided in the region of the stop (35).

12. Roller according to at least one of Claims 1 to 11, **characterized in that** the force sensor (10) is assigned at least one forcing screw (12) which can relieve the force sensor (10) of loading.

13. Roller according to at least one of Claims 1 to 12, **characterized in that** the spring (32) is supported on a bell-like cap (31), at least one securing element (45) being provided between the bell-like cap (31) and the base element (20).

## Revendications

1. Rouleau destiné à dévier une bande de matériau (2), qui est réalisée sous forme de bande tournant sans fin, le rouleau (1) étant supporté sur une plaque (7), qui est en liaison fonctionnelle, pour la mesure d'une force de palier (3) du rouleau (1), avec un capteur de force (10), qui présente un élément de base (20) sur lequel est prévu au moins un élément de capteur (25), qui présente au moins une plaque (40) déformable élastiquement par la force de palier (3), et **caractérisé en ce que** la plaque (7) supportant le rouleau (1) est maintenue de manière pivotante autour d'un palier pivotant (8), qui est supporté sur une plaque stationnaire (9), le capteur de force (10) étant prévu entre la plaque pivotante (7) et la plaque stationnaire (9), et la plaque (40) déformable élastiquement étant dotée d'au moins un transducteur de force (42), et l'élément de capteur (25) étant sollicité par une pièce de pression (29), la force de palier (3) étant introduite dans la pièce de pression (29) par le biais d'au moins un ressort (32), afin d'écarter les pointes de force causées par la bande de matériau (2) de l'élément de capteur (25), l'au moins un ressort (32) - considéré dans la direction de la force - présentant pour une même contrainte, une plus grande course de ressort que la plaque (40) déformable élastiquement, et pour limiter l'effet de la force sur l'élément de capteur (25), la pièce de pression (29) pouvant être pressée à plat contre une butée de forme annulaire (35) qui est prévue autour de l'élément de capteur (25).

2. Rouleau selon la revendication 1, **caractérisé en ce que** la butée (35) repose lâchement sur l'élément de base (20).

3. Rouleau selon la revendication 1 ou 2, **caractérisé en ce que** la butée (35) se compose de plusieurs parties empilables les unes sur les autres (36) pour effectuer une adaptation en hauteur.

4. Rouleau selon au moins l'une quelconque des revendications 1 à 3, **caractérisé en ce que** la butée (35) se compose d'acier trempé.

5. Rouleau selon au moins l'une quelconque des revendications 1 à 4, **caractérisé en ce qu'**au moins un ressort supplémentaire (39) est monté en parallèle avec la butée (35).

6. Rouleau selon au moins l'une quelconque des revendications 1 à 5, **caractérisé en ce que** la force de palier (3) est introduite dans la pièce de pression (29) par le biais d'au moins un ressort (32), qui présente - considéré dans la direction de la force - pour une même contrainte, une plus grande course de ressort que la plaque (40) déformable élastiquement, et pour limiter l'effet de la force sur le transducteur de force (42), au moins un élément de ressort (43) étant prévu entre celui-ci et la plaque (40) déformable élastiquement.

7. Rouleau selon la revendication 6, **caractérisé en ce que** l'élément de ressort (43) est formé par un composant de type caoutchouc.

8. Rouleau selon la revendication 6 ou 7, **caractérisé en ce que** l'élément de ressort (43) est formé par une membrane (43) qui est connectée à plat à la plaque (40) déformable élastiquement et au transducteur de force (42).

9. Rouleau selon au moins l'une quelconque des revendications 1 à 8, **caractérisé en ce que** le transducteur de force (42) est formé par au moins une jauge de contrainte.

10. Rouleau selon au moins l'une quelconque des revendications 1 à 9, **caractérisé en ce que** le capteur de force (10) est associé à au moins un commutateur de fin de course (11) qui arrête l'avance de la bande lors de son actionnement.

11. Rouleau selon la revendication 10, **caractérisé en ce que** le commutateur de fin de course (11) est prévu dans la région de la butée (35).

12. Rouleau selon au moins l'une quelconque des revendications 1 à 11, **caractérisé en ce que** le capteur de force (10) est associé à au moins une vis d'extraction (12) qui peut décharger la contrainte du capteur de force (10).

13. Rouleau selon au moins l'une quelconque des revendications 1 à 12, **caractérisé en ce que** le ressort (32) est supporté sur une cloche (31), au moins un élément de fixation (45) étant prévu entre la cloche (31) et l'élément de base (20).
